# EUROPEAN PATENT SPECIFICATION

(11) **EP 3 664 670 B1**
(45) Date of publication and mention of the grant of the patent: **30.12.2020**
(21) Application number: 18746226.2
(22) Date of filing: 03.08.2018
(51) Int. Cl.: A47J 31/44, B65D 47/30

(54) **LIQUID FROTHING SET, COMPRISING A LIQUID FROTHING DEVICE INCLUDING A LIQUID SUCTION CONDUIT, AND A LIQUID CONTAINER**
ZUR VERWENDUNG MIT EINER FLÜSSIGKEITSAUFSCHÄUMVORRICHTUNG KONFIGURIERTER FLÜSSIGKEITSBEHÄLTER MIT EINER FLÜSSIGKEITSSAUGLEITUNG
RÉCIPIENT DE LIQUIDE CONÇU POUR ÊTRE UTILISÉ AVEC UN DISPOSITIF D'ÉCUMAGE DE LIQUIDE COMPRENANT UN CONDUIT D'ASPIRATION DE LIQUIDE

(30) Priority: 09.08.2017 EP 17185589
(43) Date of publication of application: 17.06.2020
(73) Proprietor: Koninklijke Philips N.V., 5656 AG Eindhoven (NL)
(72) Inventor: CASTELLI, Cristiano, 5656 AE Eindhoven (NL); CAMPANA, Alex, 5656 AE Eindhoven (NL)
(74) Representative: Philips Intellectual Property & Standards
(86) International application number: PCT/EP2018/071090
(87) International publication number: WO 2019/030131

(56) References cited:
- DE-A1-102015 115 418
- GB-A- 2 480 603
- US-A1- 2007 045 313
- US-A1- 2011 192 287

## Description

### FIELD OF THE INVENTION

The invention relates to a liquid frothing set, comprising: a liquid frothing device including a liquid suction conduit, and a liquid container, the liquid container comprising: a container housing having an inlet for allowing insertion of the liquid suction conduit of the liquid frothing device in the container housing, and a closure arrangement associated with the inlet.

### BACKGROUND OF THE INVENTION

A well-known example of a liquid frothing device is a milk frother. The background of the invention will now be explained in the context of frothing milk, which should not be understood so as to imply that the invention is limited to such a context. The fact is that all aspects of the invention are equally applicable in the context of frothing other liquids.

A milk frother may be provided as a standalone device or as a part of a larger device such as a coffee maker. In either case, for the purpose of supplying milk to the milk frother during operation, the milk frother includes a liquid suction conduit for sucking milk from a source of milk. Such a liquid suction conduit is usually provided in the form of a tube or a pipe, and may be at least partially flexible. The source of milk may be a milk carton or the like, but it is also known to have a set of a milk frother and a liquid container, in which case the liquid container serves for receiving and containing milk to be used in a frothing process. The invention particularly relates to the configuration of a liquid container as mentioned.

In practical cases, such a liquid container comprises a container housing having an inlet for allowing insertion of the liquid suction conduit in the container housing. A closure arrangement may be provided, to close the inlet when no milk needs to be sucked from the liquid container. The closure arrangement may be a cap or the like that can be put in a position for covering the inlet. The cap may be provided as a separate part or a part that is movably arranged on the liquid container. For example, the cap may be hingeably arranged on the liquid container or may be arranged on the container so as to be rotatable or slideable between a position for closing the inlet and a position for allowing access to the inlet.

US 2011/192287 A1 discloses a coffee machine comprising a frothing device, wherein an internal milk channel leading to a frothing chamber is provided into which opens a bypass air inlet for operable air supply to the frothing device. A flexible milk suction line connects the frothing device with a milk supply container.

GB 2 480 603 A discloses a flow control device for installation on an opening of a container. The flow control device includes a ball valve defining a flow passage of the device.

US 2007/045313 A1 discloses a container for liquids and a lid for the same. The lid has a base that is removably and sealably coupled to the container, a mouth adapted to facilitate drinking and/or pouring liquid out of the container, and a valve member positioned therebetween. The valve member is rotatable between an open orientation in which an aperture in the valve member aligns with openings in the base and mouth, and a closed orientation in which the aperture does not align with one or both of the openings.

US 2008/296297 A1 discloses a lid structure for opening and closing an opening in an upper portion of a reagent container. The lid structure comprises an outer lid member, an inner lid member and a rotator having a through hole, and further comprises an engaging unit for rotating the rotator to open the opening when the inner lid member performs a downward opening operation and to close the opening when the inner lid member performs an upward closing operation.

US 1 960 393 A discloses a cap for connection to a collapsible tube, a ball valve being seated in the cap. To that end, axially through the cap an opening is formed, having the outer portion of its wall formed on a sphere of radius equal to that of the ball valve.

DE 10 2015 115 418 A1 discloses a milk container that can be coupled to a milk frothing device of a coffee machine. The milk container comprises two inlets: a milk inlet for supplying milk from the milk container to the milk frothing device, and a cleaning fluid inlet for receiving a cleaning fluid from the coffee machine. The milk container further includes a valve with a valve body that is movable between a milk supply position in which the milk inlet is connected to a riser tube in the milk container while the cleaning fluid inlet is blocked, and a second position in which the milk inlet and the cleaning fluid inlet are interconnected while the riser tube is blocked.

### SUMMARY OF THE INVENTION

It is an object of the invention to provide a closure arrangement that is effective in both closing an inlet in a container housing of a liquid container and allowing a liquid suction conduit of a liquid frothing device to pass through when it is desired to retrieve liquid from the liquid container. Advantageously, the closure arrangement allows for easy insertion, proper positioning and stable support of the liquid suction conduit in the liquid container. Advantageously, the closure arrangement is of uncomplicated, robust design, easy to operate and/or easy to clean.

In view of the foregoing, the invention provides a liquid frothing set, comprising a liquid frothing device including a liquid suction conduit, and a liquid container, the liquid container comprising: a container housing having an inlet for allowing insertion of the liquid suction conduit of the liquid frothing device in the container housing, and a closure arrangement comprising a seat and a closure body, wherein the seat is arranged in the inlet and has a through hole for allowing said liquid suction conduit to pass through, wherein the closure body is arranged in the seat and has a through hole for allowing said liquid suction conduit to pass through, and wherein the closure body is movable in the seat between at least two different positions, one position being an opened position in which the through hole of the closure body is aligned with the through hole of the seat, and at least one other position being a closed position in which the closure body blocks the through hole of the seat.

According to the invention, a closure arrangement of a liquid container comprises a combination of a seat and a closure body. Both the seat and the closure body have a through hole for allowing a liquid suction conduit of a liquid frothing device to pass through. The closure body is movable in the seat, wherein the closure body and the seat can be put to a mutual position in which the respective through holes are aligned and in which it is possible for the liquid suction conduit to be inserted in the container housing, through the inlet in the container housing, which is free in that situation. On the other hand, the closure body and the seat can be put to a mutual position in which the through hole of the seat is blocked by the closure body, so that the inlet of the container housing is closed in that situation. Thus, it only takes a movement of the closure body in the seat to switch between a position in which the closure arrangement is capable of allowing the liquid suction conduit to pass through and a position in which the inlet is closed by means of the closure arrangement so that any liquid as may be present inside the container housing may be preserved.

In some embodiments, in the liquid container, the seat may be configured to block the through hole of the closure body in the closed position of the closure body, so that the through holes of both the seat and the closure body can be blocked in one go, wherein there is no need for using separate means to realize complete closure of the closure arrangement, i.e. a state of the closure arrangement in which the interior of the container housing is sealed from the outside of the container housing at the position of the inlet.

In some embodiments, in the liquid container, the closure body may be rotatably arranged in the seat. The closure body may for instance be of cylindrical or spherical shape.

In some embodiments, in the liquid container, the closure body may be provided with a tab. The tab may extend from the closure body to a position outside of the container housing, so as to be readily accessible by a user. By operating the tab, a user may easily change the position of the closure body in the seat.

In some embodiments, in the liquid container, the closure body may be removable from and insertable in the seat. This is particularly advantageous in view of cleaning purposes. The seat may comprise a resilient material such as rubber. The resilient material allows for easy removal and insertion of the closure body and prevent the closure body from unintendedly falling out of the seat. The resilient material may also ensure good sealing between the closure body and the seat, which is in particular advantageous when the closure body has adopted the closed position.

In some embodiments, the liquid container may have an air inlet. Thus creation of under pressure may be prevented, by allowing air to flow into the container housing while liquid is being sucked therefrom via the liquid suction conduit. The air inlet may be included in the closure arrangement, for instance in the seat, in the closure body, and/or between the seat and the closure body. Advantageously, the air inlet may be formed such that it will be automatically opened and closed as the closure body is moved to its opened and closed position respectively. This contributes to easy, fool proof operation of the closure arrangement, with under pressure being prevented during suctioning and good closure being guaranteed afterwards, when the closure arrangement is put in its closed position.

In some embodiments, the through hole of the closure body of the liquid container may be shaped to contact the liquid suction conduit of the liquid frothin part along part of its perimeter only. The contacting part (or parts) may help to proper position and stably support the liquid suction conduit in the liquid container, while the non-contacting part (or parts) may form air gaps, allowing the pressure in the liquid container to be equalized during suctioning as explained above. Also, by reducing the contact area between the liquid suction conduit and the closure body, movement of the liquid suction conduit through the through hole may be facilitated.

For instance, the liquid suction conduit may have a circular cross section. In such case, the through hole of the closure body may have a polygonal cross section, dimensioned to have its sides contact the outer perimeter of the liquid suction conduit. Alternatively, the through hole may be provided with inwardly protruding elements, e.g. elongated ribs extending on the surface of the closure body that delimits the through hole. The protruding elements may be arranged in a regular pattern so as to have clearly defined air channels.

Additionally or alternatively to the above-mentioned possibilities, for the purpose of allowing air to flow in the container housing of the liquid container when liquid is sucked out of the container housing, the container housing may have an air inlet outside of the inlet for the liquid suction conduit.

In some embodiments, in the liquid container, the container housing may comprise a cup-shaped basic member having a bottom and a standing wall extending from the bottom, and a cover for closing the basic member, wherein the inlet and the closure arrangement are located in the cover. The cover may be coupled to the basic member, for example, in a hinging fashion. Alternatively, the cover may be removable from and connectable to the basic member, e.g. via a snap-fit connection, a bayonet-type connection or a threaded connection.

The liquid frothing device may be of any type, and may be configured to froth milk, for example. In general, a liquid frothing device is designed to supply air to a quantity of liquid in such a way that froth (also referred to as foam) is formed. The liquid frothing device may be provided as a module of a larger device such as a coffee maker.

The liquid frothing device may comprise a supporting member configured to receive the liquid container and to put the liquid container in a predetermined position with respect to the liquid frothing device. Irrespective of whether or not the liquid frothing device comprises a supporting member as mentioned, the invention is advantageous in that the movable arrangement of the closure member in the seat allows for a certain flexibility in the orientation of the liquid suction conduit relative to the container housing during insertion and removal of the conduit. In other words, thanks to the movable arrangement, some play is provided for manipulating the liquid suction conduit with respect to the container housing, wherein it is not necessary for a user to be very precise when it comes to orienting the liquid suction conduit with respect to the container housing. Thus, it is easier to maneuver the liquid suction conduit, the liquid container or both into position. Ease of insertion and removal of the liquid suction conduit may even be further enhanced by the afore described aspect where the contact area between the closure body and the liquid suction conduit is reduced along the perimeter of the latter.

The movable arrangement and increased maneuverability also allow the through hole in the closure body to be of increased length, thus allowing the inserted liquid suction conduit to be supported over a longer length, which may result in a better, more stable support.

The above-described and other aspects of the invention will be apparent from and elucidated with reference to the following detailed description of an advantageous embodiment of a liquid container that is suitable for use with a liquid frothing device. The embodiment as shown and described is one of many examples existing within the framework of the invention.

### BRIEF DESCRIPTION OF THE DRAWINGS

The invention will now be explained in greater detail with reference to the figures, in which equal or similar parts are indicated by the same reference signs. In particular,
Figure 1 schematically shows a perspective view of the liquid container, the closure body being in the opened position;
Figure 2 schematically shows a sectional view of the liquid container with the closure body in the opened position;
Figure 3 is an enlarged view of a portion of figure 2;
Figure 4 schematically shows a perspective view of the liquid container, the closure body being in the opened position and a liquid suction conduit of a liquid frothing device extending through the closure body;
Figure 5 schematically shows a sectional view of the liquid container with the closure body in the opened position and the liquid suction conduit extending therethrough;
Figure 6 is an enlarged view of a portion of figure 5;
Figure 7 schematically shows a perspective view of the liquid container, the closure body being in the closed position;
Figure 8 schematically shows a sectional view of the liquid container with the closure body in the closed position;
Figure 9 is an enlarged view of a portion of figure 8;
Figure 10 schematically shows a perspective view of the liquid container, the closure body being removed from the seat; and
Figure 11 illustrates use of the liquid container with a liquid frothing device including a liquid suction conduit.

### DETAILED DESCRIPTION OF EMBODIMENTS

The invention is in the field of liquid containers for use with a liquid frothing device including a liquid suction conduit. In the following description of an advantageous embodiment of the invention as illustrated in the figures, it is assumed that the liquid container is a milk container that is designed for use with a milk frother including a milk suction conduit. In this respect, for the sake of completeness, it is noted that the features of the liquid container according to the invention are independent of the type of liquid that may be contained in the liquid container.

In general, a liquid frothing device such as a milk frother comprises a liquid suction conduit for sucking liquid to be frothed from a source of the liquid. Further, a liquid frothing device has some kind of air supply for taking in air to a space where it can be made to interact with the liquid so as to form froth. As is known per se in the art, various measures may be taken for promoting a frothing process, such as letting a jet of liquid squirt against a surface for beating air into the liquid. As the invention is not related to the design of a liquid frothing device, further details of such a device will not be explained here. The aspect of a liquid frothing device that is relevant in the context of the invention is the fact that the liquid frothing device is equipped with a mechanism for retrieving liquid from a source of the liquid, particularly with a liquid suction conduit.

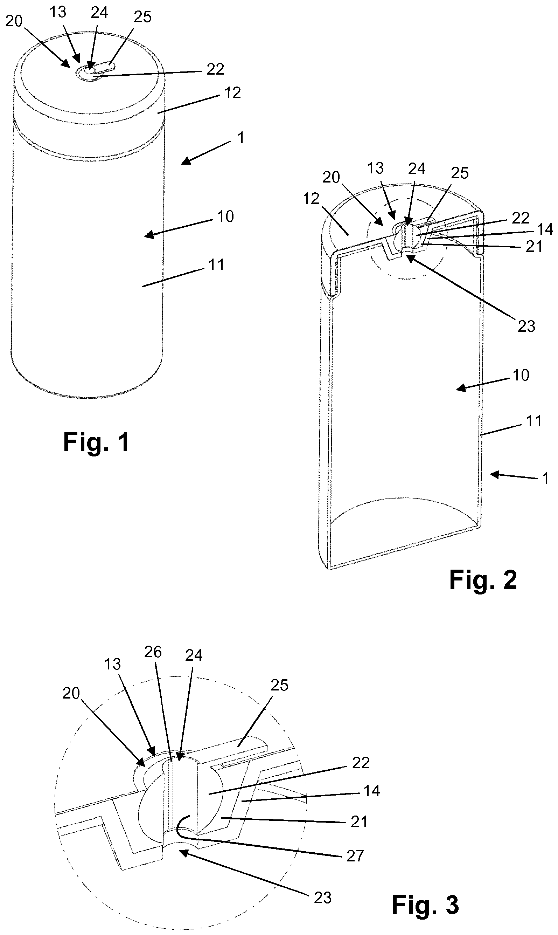

With reference to the figures, details of the invention as embodied in a milk container 1 as shown will now be explained. The milk container 1 comprises a container housing 10, i.e. an enclosure for the milk to be contained by the milk container 1. The container housing 10 comprises two parts, namely a basic member 11 and a cover 12. The basic member 11 is generally shaped like a cup having a bottom, a standing wall and an open side, wherein the cover 12 has a function in closing the open side of the basic member 11. The basic member 11 and the cover 12 are separate components which are connectable to each other by means of screw thread. Particularly, as can be seen in the sectional views of figures 2, 3, 5, 6, 8 and 9, a top portion of the basic member 11 is provided with external screw thread and the cover 12 is provided with internal screw thread. A screw thread connection is just one of many possibilities when it comes to closing the open side of the basic member 11 by means of the cover 12. Examples of another possibility include a snap connection and a twist-lock connection. Alternatively, the cover 12 may be hingeably connected to the basic member 11, or may be slideable in/on the basic member 11, for example. The invention is not restricted to any particular design of the container housing 10, and the details of the milk container 1 as described herein are not implicitly related to any particular design of the container housing 10 either.

The basic member 11 and the cover 12 may be made of any suitable materials, including plastic materials. For the sake of completeness, it is noted that the basic member 11 is shown in the figures as being transparent, whereas the cover 12 is shown in the figures as being opaque.

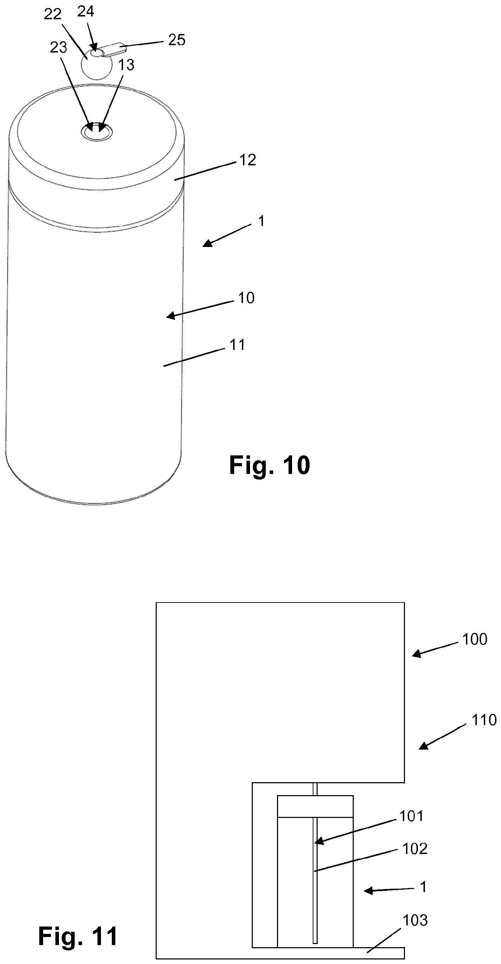

The milk container 1 may serve as a milk source for a milk frother 100 as schematically depicted in figure 11, in which a set of the milk frother 100 and the milk container 1 is indicated by reference numeral 110. The milk frother 100 includes a milk suction conduit 101 for the purpose of sucking milk from the milk container 1. In view thereof, the container housing 10 has an inlet 13 for allowing insertion of the suction conduit 101, more particularly, an end portion 102 thereof, in the container housing 10. The inlet 13 may have any suitable position in the container housing 10. In the shown example, the inlet 13 is centrally located in the cover 12. Prior to operation of the milk frother 100, a user is supposed to maneuver the milk suction conduit 101 or at least the end portion 102 thereof into the container housing 10 through the inlet 13. For the purpose of supporting the milk container 1 and also guiding a user in putting the milk container 1 in an appropriate position with respect to the milk frother 100, the milk frother 100 may comprise a supporting member 103 as schematically depicted in figure 11.

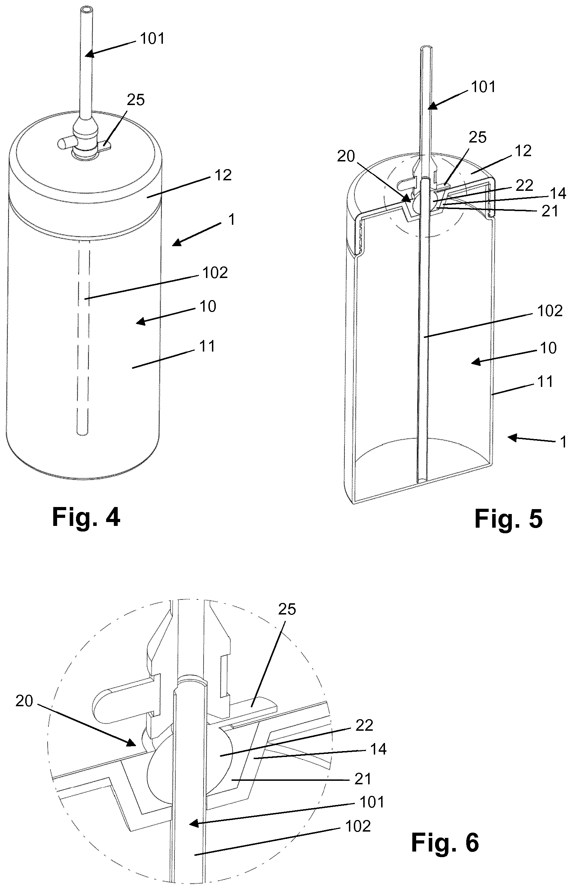

In general, the milk suction conduit 101 may be shaped like a tube or a pipe. It may have a flexible portion to enhance its maneuverability. The end portion 102 of the milk suction conduit 101 may be rigid. As illustrated in figures 5 and 6, the end portion 102 may be provided as a separate component that is coupled to the remainder of the milk suction conduit 101.

The milk container 1 is not only suitable for delivering milk to a milk frother 100 but may also serve to store the milk when not used. To that end, the milk container 1 can be placed in a fridge or another cool spot. In order to preserve the milk in the best possible way, the milk container 1 comprises a closure arrangement 20 that is located in the inlet 13, so that a fully closed condition of the container housing 10 can be realized for storage purposes. In particular, the closure arrangement 20 is designed to be capable of leaving the inlet 13 open when it is desired to have the milk suction conduit 101 inserted in the container housing 10 as well as to be capable of closing the inlet 13 when it is desired to preserve the content of the container housing 10.

In the advantageous embodiment of the milk container 1 as shown in the figures, the closure arrangement 20 comprises a seat 21 and a closure body 22, wherein the seat 21 is arranged in the inlet 13, and wherein the closure body 22 is arranged in the seat 21. As can be seen in the sectional views of figures 2, 3, 5, 6, 8 and 9, the cover 12 is designed with a holding section 14 for accommodating the closure arrangement 20 at the position of the inlet 13. The seat 21 has a through hole 23 for allowing the milk suction conduit 101 to pass through, and the closure body 22 has a through hole 24 for allowing the milk suction conduit 101 to pass through as well. The closure body 22 is of spherical shape, in other words, the closure body 22 is ball-shaped, and is rotatably arranged in the seat 21. The seat 21 is designed so as to be capable of encompassing a part of the closure body 22 and holding the closure body 22 in that way. In an alternative embodiment, the closure body 22 could be of cylindrical shape, with the seat 21 being shaped accordingly.

In the shown closure arrangement 20, it is possible to have the closure body 22 in an opened position, i.e. a position in which the through hole 24 of the closure body 22 is aligned with the through hole 23 of the seat 21. This is done when it is desired to retrieve milk from the milk container 1. On the other hand, it is possible to have the closure body 22 in a closed position, i.e. a position in which the through hole 23 of the seat 21 is blocked by the closure body 22. All that is needed to move the closure body 22 between the opened position and the closed position is rotating the closure body 22 over an angle of 90°. For the purpose of enabling a user to operate the closure body 22, a tab 25 is arranged on the closure body 22, extending from the closure body 22 to a position outside of the container housing 10. The tab 25 may be positioned on the closure body 22 in such a way that it may serve as a stop that helps a user in actually realizing the predetermined positions of the closure body 22. As mentioned, the seat 21 is designed so as to be capable of encompassing a part of the closure body 22. This is advantageously done in such a way that when the closure body 22 is in the closed position, the through hole 24 of the closure body 22 is blocked by the seat 21.

The seat 21 may comprise a resilient material. For example, the seat 21 may be made of rubber. Resilient properties of the seat 21 may help in obtaining a sealing closure of the container housing 10 in the closed position of the closure body 22. Further, resilient properties of the seat 21 may help in offering a possibility of removing the closure body 22 from the seat 21, as illustrated in figure 10. This possibility may be useful for cleaning purposes, for example. In that case, the closure body 22 can easily be removed from the seat 21, wherein the tab 25 may be used for lifting the closure body 22 from the seat 21, and can easily be snapped back in place in the seat 21 again.

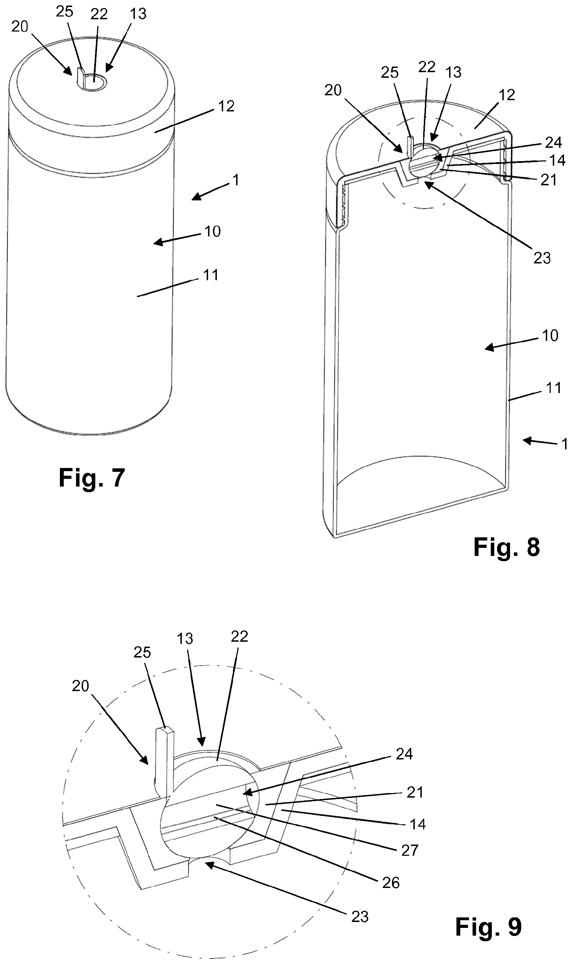

As best seen in figures 3 and 9, the closure body 22 comprises a set of ribs 26 extending on a surface 27 of the closure body 22 delimiting the through hole 24. The ribs 26 extend in the direction in which the milk suction conduit 101, 102 is moved through the through hole 24. The ribs 26 may serve to calibrate the insertion force and at the same time ensure a presence of air gaps so as to allow air to flow in the container housing during a milk sucking process. Thanks to the fact that the closure body 22 can be rotated in the seat 21, it is easy to adjust the position of the closure body 22, and in particular the orientation of the through hole 24, as may be necessary during insertion or removal of the milk suction conduit 101, 102 in, respectively from the container housing 10. The rotatable arrangement of the closure body 22 allows the closure body 22, and more particularly the through hole 24, to follow tilting movements of the milk suction conduit 101, 102, which may occur in a process of maneuvering the milk container 1 and the milk suction conduit 101, 102 in and out of place with respect to each other.

Thanks to a closure arrangement according to the invention, a user is not compelled to realize and maintain a strictly perpendicular orientation of the milk suction conduit 101, 102 relative to the cover 12 during insertion and removal of the milk suction conduit 101, 102. This advantageous effect of the invention is independent of a length along which the milk suction conduit 101 is actually encompassed in the cover 12 and thus guided. Hence, the invention offers a possibility of realizing a robust and reliable arrangement of the milk suction conduit 101 with respect to the milk container 1, without affecting ease of insertion and removal of the liquid suction conduit 101.

It will be clear to a person skilled in the art that the scope of the invention is not limited to the examples discussed in the foregoing, but that several amendments and modifications thereof are possible without deviating from the scope of the invention as defined in the attached claims. It is intended that the invention be construed as including all such amendments and modifications insofar they come within the scope of the claims. While the invention has been illustrated and described in detail in the figures and the description, such illustration and description are to be considered illustrative or exemplary only, and not restrictive. The invention is not limited to the disclosed embodiments. The drawings are schematic, wherein details that are not required for understanding the invention may have been omitted, and not necessarily to scale.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. Any reference signs in the claims should not be construed as limiting the scope of the invention.

Elements and aspects discussed for or in relation with a particular embodiment may be suitably combined with elements and aspects of other embodiments, unless explicitly stated otherwise. Thus, the mere fact that certain measures are recited in mutually different dependent claims does not indicate that a combination of these measures cannot be used to advantage.

The term "comprise" as used in this text will be understood by a person skilled in the art as covering the term "consist of'. Hence, the term "comprise" may in respect of an embodiment mean "consist of', but may in another embodiment mean "contain/include at least the defined species and optionally one or more other species".

A possible summary of the invention reads as follows. A liquid frothing set 110 is provided, comprising a liquid frothing device 100 including a liquid suction conduit 101, and a liquid container 1. The liquid container 1 comprises a container housing 10 having an inlet 13 and a closure arrangement 20. The closure arrangement comprises a seat 21 that is arranged in the inlet 13 and a closure body 22 that is arranged in the seat 21. Both the seat 21 and the closure body 22 have a through hole 23, 24 for allowing a liquid suction conduit 101 of a liquid frothing device 100 to pass through. The closure body 22 is movable in the seat 21 between at least an opened position in which the respective through holes 23, 24 of the seat 21 and the closure body 22 are aligned with each other, and a closed position in which the closure body 22 blocks the through hole 23 of the seat 21.

## Claims

1. Liquid frothing set (110), comprising a liquid frothing device (100) including a liquid suction conduit (101), and a liquid container (1), the liquid container (1) comprising:
- a container housing (10) having an inlet (13), and
- a closure arrangement (20) comprising a seat (21) and a closure body (22), wherein the seat (21) has a through hole (23), wherein the closure body (22) is arranged in the seat (21) and has a through hole (24), and wherein the closure body (22) is movable in the seat (21) between at least two different positions, one position being an opened position in which the through hole (24) of the closure body (22) is aligned with the through hole (23) of the seat (21), and at least one other position being a closed position in which the closure body (22) blocks the through hole (23) of the seat (21), **characterized in that**
the inlet (13) is for allowing insertion of the liquid suction conduit (101) of the liquid frothing device (100) in the container housing (10);
the seat (21) is arranged in the inlet (13);
the through hole (23) of the seat (21) is for allowing the liquid suction conduit (101) to pass through; and
the through hole (24) of the closure body (22) is for allowing the liquid suction conduit (101) to pass through.

2. Liquid frothing set (110) according to claim 1, wherein, in the liquid container (1), the seat (21) is configured to block the through hole (24) of the closure body (22) in the closed position of the closure body (22).

3. Liquid frothing set (110) according to claim 1 or 2, wherein, in the liquid container (1), the closure body (22) is rotatably arranged in the seat (21).

4. Liquid frothing set (110) according to any of claims 1-3, wherein, in the liquid container (1), the closure body (22) is of spherical shape.

5. Liquid frothing set (110) according to any of claims 1-4, wherein, in the liquid container (1), the closure body (22) comprises a tab (25) extending from the closure body (22) to a position outside of the container housing (10).

6. Liquid frothing set (110) according to any of claims 1-5, wherein, in the liquid container (1), the closure body (22) is removably arranged in the seat (21).

7. Liquid frothing set (110) according to any of claims 1-6, wherein, in the liquid container (1), the seat (21) comprises a resilient material.

8. Liquid frothing set (110) according to any of claims 1-7, wherein, in the liquid container (1), the container housing (10) has an air inlet.

9. Liquid frothing set (110) according to claim 8, wherein, in the liquid container (1), the air inlet is included in the closure arrangement (20).

10. Liquid frothing set (110) according to any of claims 1-9, wherein the through hole (24) of the closure body (22) of the liquid container (1) is shaped to contact the liquid suction conduit (101) of the liquid frothing device (100), in inserted condition, along part of its perimeter only.

11. Liquid frothing set (110) according to any of claims 1-10, wherein, in the liquid container (1), the container housing (10) comprises a cup-shaped basic member (11) having a bottom and a standing wall extending from the bottom, and a cover (12) for closing the basic member (11), wherein the inlet (13) and the closure arrangement (20) are located in the cover (12).

12. Liquid frothing set (110) according to claim 11, wherein, in the liquid container (1), the cover (12) is removably connectable to the basic member (11).

13. Liquid frothing set (110) according to any of claims 1-12, wherein the liquid frothing device (100) is part of a coffee maker.

## Patentansprüche

1. Ein Set zum Aufschäumen von Flüssigkeit (110), das ein Gerät (100) zum Aufschäumen von Flüssigkeit mit einer Flüssigkeitssaugleitung (101) und einem Flüssigkeitsbehälter (1) umfasst, wobei der Flüssigkeitsbehälter (1) Folgendes umfasst:
- ein Behältergehäuse (10) mit einem Einlass (13), und
- eine Verschlussbaugruppe (20) mit einer Befestigungsfläche (21) und einem Verschlussgehäuse (22), wobei die Befestigungsfläche (21) eine Durchgangsbohrung (23) aufweist, und wobei das Verschlussgehäuse (22) auf der Befestigungsfläche (21) angeordnet ist und eine Durchgangsbohrung (24) aufweist, und wobei das Verschlussgehäuse (22) auf der Befestigungsfläche (21) zwischen mindestens zwei verschiedenen Positionen bewegt werden kann, bei denen es sich um eine geöffnete Position, in der die Durchgangsbohrung (24) des Verschlussgehäuses (22) an der Durchgangsbohrung (23) der Befestigungsfläche (21) ausgerichtet ist, und mindestens eine weitere geschlossene Position handelt, in der das Verschlussgehäuse (22) die Durchgangsbohrung (23) der Befestigungsfläche (21) blockiert, und das sich dadurch auszeichnet, dass
der Einlass (13) dazu dient, die Flüssigkeitsansaugleitung (101) des Geräts zum Aufschäumen von Flüssigkeit (100) in das Behältergehäuse (10) einzuführen;
die Befestigungsfläche (21) am Einlass (13) angeordnet ist;
die Durchgangsbohrung (23) der Befestigungsfläche (21) dazu dient, die Flüssigkeitsansaugleitung (101) durchzuführen; und
die Durchgangsbohrung (24) des Verschlussgehäuses (22) dazu dient, die Flüssigkeitsansaugleitung (101) durchzuführen.

2. Das Set zum Aufschäumen von Flüssigkeit (110) gemäß Anspruch 1, wobei die Befestigungsfläche (21) im Flüssigkeitsbehälter (1) die Durchgangsbohrung (24) des Verschlussgehäuses (22) in der geschlossenen Position des Verschlussgehäuses (22) blockiert.

3. Das Set zum Aufschäumen von Flüssigkeit (110) gemäß Anspruch 1 oder 2, wobei das Verschlussgehäuse (22) im Flüssigkeitsbehälter (1) auf der Befestigungsfläche (21) gedreht werden kann.

4. Das Set zum Aufschäumen von Flüssigkeit (110) gemäß einem der Ansprüche 1 bis 3, wobei das Verschlussgehäuse (22) im Flüssigkeitsbehälter (1) kugelförmig ist.

5. Das Set zum Aufschäumen von Flüssigkeit (110) gemäß einem der Ansprüche 1 bis 4, wobei das Verschlussgehäuse (22) im Flüssigkeitsbehälter (1) eine Lasche (25) aufweist, die sich vom Verschlussgehäuse (22) bis zu einer Stelle außerhalb des Behältergehäuses (10) erstreckt.

6. Das Set zum Aufschäumen von Flüssigkeit (110) gemäß einem der Ansprüche 1 bis 5, wobei das Verschlussgehäuse (22) im Flüssigkeitsbehälter (1) von der Befestigungsfläche (21) entfernt werden kann.

7. Das Set zum Aufschäumen von Flüssigkeit (110) gemäß einem der Ansprüche 1 bis 6, wobei die Befestigungsfläche (21) im Flüssigkeitsbehälter (1) aus einem elastischen Material besteht.

8. Das Set zum Aufschäumen von Flüssigkeit (110) gemäß einem der Ansprüche 1 bis 7, wobei das Behältergehäuse (10) im Flüssigkeitsbehälter (1) einen Lufteinlass aufweist.

9. Das Set zum Aufschäumen von Flüssigkeit (110) gemäß Anspruch 8, wobei im Flüssigkeitsbehälter (1) der Lufteinlass Teil der Verschlussbaugruppe (20) ist.

10. Das Set zum Aufschäumen von Flüssigkeit (110) gemäß einem der Ansprüche 1 bis 9, wobei die Durchgangsbohrung (24) des Verschlussgehäuses (22) des Flüssigkeitsbehälters (1) so geformt ist, dass sie die Flüssigkeitssaugleitung (101) des eingesetzten Geräts zum Aufschäumen von Flüssigkeit (100) nur entlang eines Teils des Umfangs berührt.

11. Das Set zum Aufschäumen von Flüssigkeit (110) gemäß einem der Ansprüche 1 bis 10, wobei das Behältergehäuse (10) im Flüssigkeitsbehälter (1) ein becherförmiges Grundelement (11) mit einem Boden und einer sich vom Boden nach oben erstreckenden Wand sowie einem Deckel (12) zum Verschließen des Grundelements (11) aufweist, wobei der Einlass (13) und die Verschlussbaugruppe (20) im Deckel (12) angeordnet sind.

12. Das Set zum Aufschäumen von Flüssigkeit (110) gemäß Anspruch 11, wobei der Deckel (12) im Flüssigkeitsbehälter (1) vom Grundelement (11) entfernt oder auf diesem angebracht werden kann.

13. Das Set zum Aufschäumen von Flüssigkeit (110) gemäß einem der Ansprüche 1 bis 12, wobei das Gerät zum Aufschäumen von Flüssigkeit (100) Teil einer Kaffeemaschine ist.

## Revendications

1. Ensemble de moussage de liquide (110), comprenant un dispositif de moussage de liquide (100) comportant un conduit d'aspiration de liquide (101), et un récipient de liquide (1), ledit récipient de liquide (1) comprenant :
- un boîtier de récipient (10) comportant une entrée (13), et
- un agencement de fermeture (20) comprenant un siège (21) et un corps de fermeture (22),
dans lequel le siège (21) comporte un trou traversant (23), dans lequel le corps de fermeture (22) est agencé dans le siège (21) et comporte un trou traversant (24), et dans lequel le corps de fermeture (22) est mobile dans le siège (21) entre au moins deux positions différentes, une position étant une position ouverte dans laquelle le trou traversant (24) du corps de fermeture (22) est aligné avec le trou traversant (23) du siège (21), et au moins une autre position étant une position fermée dans laquelle le corps de fermeture (22) bloque le trou traversant (23) du siège (21), **caractérisé en ce que** l'entrée (13) est destinée à permettre l'insertion du conduit d'aspiration de liquide (101) du dispositif de moussage de liquide (100) dans le boîtier de récipient (10) ;
le siège (21) est agencé dans l'entrée (13) ;
le trou traversant (23) du siège (21) est destiné à permettre le passage du conduit d'aspiration de liquide (101) ; et
le trou traversant (24) du corps de fermeture (22) est destiné à permettre le passage du conduit d'aspiration de liquide (101).

2. Ensemble de moussage de liquide (110) selon la revendication 1, dans lequel, dans le récipient de liquide (1), le siège (21) est conçu pour bloquer le trou traversant (24) du corps de fermeture (22) dans la position fermée du corps de fermeture (22).

3. Ensemble de moussage de liquide (110) selon la revendication 1 ou 2, dans lequel, dans le récipient de liquide (1), le corps de fermeture (22) est agencé de manière rotative dans le siège (21).

4. Ensemble de moussage de liquide (110) selon l'une quelconque des revendications 1 à 3, dans lequel, dans le récipient de liquide (1), le corps de fermeture (22) est de forme sphérique.

5. Ensemble de moussage de liquide (110) selon l'une quelconque des revendications 1 à 4, dans lequel, dans le récipient de liquide (1), le corps de fermeture (22) comprend une languette (25) s'étendant du corps de fermeture (22) vers une position à l'extérieur du boîtier de récipient (10).

6. Ensemble de moussage de liquide (110) selon l'une quelconque des revendications 1 à 5, dans lequel, dans le récipient de liquide (1), le corps de fermeture (22) est agencé de manière amovible dans le siège (21).

7. Ensemble de moussage de liquide (110) selon l'une quelconque des revendications 1 à 6, dans lequel, dans le récipient de liquide (1), le siège (21) comprend un matériau élastique.

8. Ensemble de moussage de liquide (110) selon l'une quelconque des revendications 1 à 7, dans lequel, dans le conteneur de liquide (1), le boîtier de conteneur (10) comporte une entrée d'air.

9. Ensemble de moussage de liquide (110) selon la revendication 8, dans lequel, dans le récipient de liquide (1), l'entrée d'air est comprise dans l'agencement de fermeture (20).

10. Ensemble de moussage de liquide (110) selon l'une quelconque des revendications 1 à 9, dans lequel le trou traversant (24) du corps de fermeture (22) du récipient de liquide (1) est formé pour entrer en contact avec le conduit d'aspiration de liquide (101) du dispositif de moussage de liquide (100), à l'état inséré, le long d'une partie de son périmètre seulement.

11. Ensemble de moussage de liquide (110) selon l'une quelconque des revendications 1 à 10, dans lequel, dans le récipient de liquide (1), le boîtier de récipient (10) comprend un élément de base (11) en forme de coupe comportant un fond et une paroi verticale s'étendant depuis le fond, et un couvercle (12) pour fermer l'élément de base (11), dans lequel l'entrée (13) et l'agencement de fermeture (20) sont situés dans le couvercle (12).

12. Ensemble de moussage de liquide (110) selon la revendication 11, dans lequel, dans le récipient de liquide (1), le couvercle (12) peut être raccordé de manière amovible à l'élément de base (11).

13. Ensemble de moussage de liquide (110) selon l'une quelconque des revendications 1 à 12, dans lequel le dispositif de moussage de liquide (100) fait partie d'une machine à café.
